(19) Europäisches Patentamt
European Patent Office
Office européen des brevets

(11) **EP 3 903 334 B1**

(12) **FASCICULE DE BREVET EUROPEEN**

(45) Date de publication et mention
de la délivrance du brevet:
**17.07.2024 Bulletin 2024/29**

(21) Numéro de dépôt: **19849035.1**

(22) Date de dépôt: **23.12.2019**

(51) Classification Internationale des Brevets (IPC):
**H01H 33/59** *(2006.01)*

(52) Classification Coopérative des Brevets (CPC):
**H01H 33/596;** Y02E 60/60

(86) Numéro de dépôt international:
**PCT/FR2019/053292**

(87) Numéro de publication internationale:
**WO 2020/136350 (02.07.2020 Gazette 2020/27)**

(54) **DISPOSITIF DE COUPURE DE COURANT POUR COURANT CONTINU HAUTE TENSION AVEC CIRCUIT D'OSCILLATION ADAPTATIF ET PROCÉDÉ DE PILOTAGE**

STROMUNTERBRECHERVORRICHTUNG FÜR HOCHSPANNUNGSGLEICHSTROM MIT ADAPTIVEM SCHWINGKREIS UND STEUERUNGSVERFAHREN

CURRENT BREAKER DEVICE FOR HIGH-VOLTAGE DIRECT CURRENT WITH ADAPTIVE OSCILLATORY CIRCUIT, AND CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2018 FR 1874217**

(43) Date de publication de la demande:
**03.11.2021 Bulletin 2021/44**

(73) Titulaire: **Supergrid Institute**
**69100 Villeurbanne (FR)**

(72) Inventeur: **YANG, Yang**
**69100 VILLEURBANNE (FR)**

(74) Mandataire: **Cabinet Beau de Loménie**
**51 avenue Jean Jaurès**
**BP 7073**
**69301 Lyon Cedex 07 (FR)**

(56) Documents cités:
EP-A1- 3 091 626    WO-A1-2012/100831
WO-A1-2015/103857    CN-A- 103 296 636

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine Technique

L'invention concerne le domaine des réseaux de transmission et / ou de distribution de courant électrique continu sous haute tension, généralement désignés sous l'acronyme HVDC. L'invention porte en particulier sur les dispositifs de coupure de courant de défaut destinés à de tels réseaux.
Les réseaux HVDC sont notamment envisagés comme une solution à l'interconnexion de sites de production d'électricité disparates ou non synchrones. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 100 kV et plus.
Dans le présent texte, on considère comme haute tension, pour un courant continu, un dispositif dans lequel la tension de service nominale est supérieure à 1500 V en courant continu. Une telle haute tension est, de manière complémentaire, qualifiée également de très haute tension lorsqu'elle est supérieure à 75 000 V (75kV) en courant continu. Bien entendu, le domaine de la haute tension inclue le domaine de la très haute tension.
La coupure du courant continu dans de tels réseaux est un enjeu crucial conditionnant directement la faisabilité et le développement de tels réseaux.
On connaît des appareils de coupure de type disjoncteur mécanique pour réaliser la coupure de courant alternatif, c'est à dire que la coupure du courant est obtenue uniquement par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Ces disjoncteurs mécaniques présentent plusieurs inconvénients lorsqu'ils sont traversés par des courants importants.
En présence d'un courant et / ou d'une tension importante, la séparation mécanique peut se traduire par l'établissement d'un arc électrique entre les deux pièces conductrices, du fait des énergies importantes accumulées dans le réseau que l'appareil protège. Tant que l'arc électrique reste établi au travers de la séparation mécanique, l'appareil de coupure ne réalise pas la coupure électrique puisqu'un courant continue de circuler au travers de l'appareil par la présence de l'arc. La coupure électrique, au sens de l'interruption effective de la circulation du courant électrique, est parfois particulièrement difficile à réaliser dans un contexte de courant continu et de tension élevée, ces conditions tendant à entretenir l'arc électrique. Par ailleurs, cet arc électrique dégrade, d'une part par érosion les deux pièces conductrices faisant contact, et d'autre part le milieu environnant par ionisation. De plus, le courant met un certain temps à s'interrompre du fait de cette ionisation. Cela nécessite des opérations de maintenance de l'appareil de coupure qui sont contraignantes et coûteuses.
Les courants de défauts en réseau HVDC sont particulièrement violents et destructeurs. Lorsqu'un défaut générant un fort courant apparait, il est nécessaire de le couper rapidement ou éventuellement de le limiter en attendant que la coupure soit possible. De plus, la coupure des courants HVDC est plus complexe à réaliser que celle des courants alternatifs (AC). En effet, lors de la coupure d'un courant alternatif, on profite d'un passage par zéro du courant pour réaliser la coupure, ce qui n'est pas le cas avec un courant continu, notamment HVDC.

### Technique antérieure

Diverses solutions ont été proposées pour faciliter la coupure de courant dans une ligne HVDC. On peut par exemple citer les documents WO-2015/078525, US-2017/0178844, ou DE-2136865.
Certaines solutions font appel à de nombreux composants actifs de commutation à semi-conducteurs, principalement des thyristors et des IGBT. Or, ces composants ont un rapport prix / puissance élevé. Une utilisation excessive de tels commutateurs à semi-conducteurs augmente le coût de la solution.
Les documents WO-2015/185096, US4442469 et US3758790 décrivent chacun un dispositif de coupure de courant pour courant continu haute tension. Ces dispositifs comprennent un interrupteur primaire, mécanique, et un interrupteur secondaire, mécanique, interposés successivement dans la ligne principale entre le point primaire et le point secondaire mais de part et d'autre d'un point intermédiaire de la ligne principale, les deux interrupteurs mécaniques étant commandés chacun entre un état ouvert et un état fermé. Cependant, il reste à résoudre le problème de l'interruption de courant dans un interrupteur mécanique en présence d'un arc électrique entre les contacts séparés mécaniquement.
De plus, il est connu de prévoir un circuit d'oscillation qui est agencé électriquement en parallèle de l'interrupteur. Le circuit d'oscillation est conçu pour, et apte à générer un passage par zéro du courant au travers de l'interrupteur pour favoriser la coupure électrique au travers de l'interrupteur primaire lorsque celui-ci est mécaniquement ouvert. Dans certains modes de réalisation connus, le circuit d'oscillation comporte au moins une inductance, une capacité et un enclencheur d'oscillation, agencés électriquement en série dans le circuit d'oscillation en parallèle de l'interrupteur dans lequel on veut assurer la coupure électrique effective. Souvent, il est prévu que la capacité soit pré-chargée avant l'enclenchement du circuit d'oscillation. Dans ce cas, le circuit peut comporter un circuit de pré-charge de la capacité. Cependant, il faut alors configurer ce circuit s'oscillation pour qu'il puisse interrompre tous les courants de défaut susceptibles de survenir au travers de l'interrupteur concerné, dont notamment ceux ayant l'intensité maximale qui puisse être anticipée. Or, en utilisation, il existe parfois des courants de défaut qui n'atteignent pas cette valeur maximale. Dans ce cas, un circuit d'oscillation peut s'avérer surdimensionné, au sens que le contre-courant qu'il génère sera très important par rapport au courant de défaut. Il s'ensuit que, dans ce cas, le circuit d'oscillation va bien générer un ou plusieurs passages par zéro du courant au travers de l'interrupteur concerné, mais un tel passage par zéro peut alors se faire avec une trop forte vitesse variation de l'intensité dI/dt au travers de l'interrupteur. En présence d'une trop forte vitesse de variation de l'intensité dI/dt au travers de l'interrupteur, il se peut que la coupure électrique ne se fasse pas, malgré le passage par zéro.

Le dispositif prévu par EP-3.091.626 est de ce type, comportant un circuit d'oscillation qui est agencé électriquement en parallèle de l'interrupteur. Ce document ne divulgue pas un dispositif de coupure qui permettant d'insérer résistance en série dans un circuit d'oscillation qui, lui, serait en parallèle de l'interrupteur primaire. En effet, dans un circuit électrique, deux composants sont en série s'ils sont parcourus par le même courant électrique. Donc, dans EP-3.091.626, la résistance 150 ne peut pas être en série dans le circuit d'oscillation qui est en parallèle de l'interrupteur 110. En effet, on peut admettre que, dans EP-3.091.626, lorsque les deux interrupteurs 130, 140 sont ouverts, le courant circulant dans la résistance 150 est le même que celui circulant dans le composant LC 120. Cependant, dans ce cas, ni la résistance 150 ni le composant LC 120 ne sont dans un circuit oscillant en parallèle de l'interrupteur 110. Et, lorsque l'un ou l'autre des interrupteurs 120 ou 130 est fermé, le courant à travers la résistance 150 ne peut être le même que celui qui circule dans le composant LC 120 puisque quasiment l'intégralité du courant qui circule dans le composant LC 120 circule dans la branche qui comporte l'interrupteur 120 ou 130 qui est fermé, et pas dans la résistance 150. Dans D1, le rôle de la résistance 150 est simplement de permettre le chargement de la capacité. La résistance ne joue aucun rôle dans le circuit d'oscillation lorsque celui-ci injecte du courant dans la ligne principale.

Certains documents d'art antérieur ont proposé des circuits adaptatifs pour adapter les caractéristiques du circuit d'oscillation en fonction du courant de défaut.

Le document US-2014/299.579, aussi publié sous le numéro DE-10.2011.083514, décrit un circuit d'oscillation comportant au moins deux branches parallèles ayant chacune un condensateur en série avec un commutateur de branche de condensateur. En fonction du courant de défaut, il est possible de sélectionner le nombre de capacités qui vont décharger leur électricité stockée dans le circuit d'oscillation. Ainsi ce circuit adaptatif peut adapter l'amplitude du contre-courant qui est injecté dans la ligne principale. Dans chaque branche du système le commutateur doit supporter la pleine tension, ce qui nécessite des composants coûteux et volumineux.

Le document WO-2015/166600 décrit un circuit d'oscillation comportant des moyens pour adapter la valeur d'inductance d'un circuit d'oscillation. Un mode de réalisation comporte plusieurs composants inductifs dédiés, par exemple plusieurs bobines, dont certains au moins sont équipés d'un interrupteur de bypass. Les interrupteurs de by-pass doivent supporter de fortes tensions, ce qui nécessite des composants coûteux et volumineux.

Cependant, dans les dispositifs selon ces deux derniers documents, qui influent sur la capacité totale ou l'inductance totale qui est mise en oeuvre dans le circuit d'oscillation, il est généralement nécessaire de prévoir de nombreux paliers de valeur de capacité totale ou d'inductance totale pour que le circuit d'oscillation soit capable d'interrompre l'arc électrique sur toute la plage possible des courants de défaut. Cela conduit en pratique à multiplier le nombre de composants dédiés, inductifs ou capacitifs, et encore plus à multiplier le nombre d'interrupteurs de commande associés directement à ce circuit d'oscillation. Cela conduit à un coût et un encombrement qui sont importants.

En résumé, selon l'art antérieur, on ne trouve pas de solution à fois compacte et peu onéreuse permettant de garantir une coupure effective du courant dans un interrupteur mécanique pour une large plage de courants à couper, que ce soit un courant de charge ou un courant de défaut, notamment lorsqu'on envisage une gamme de courants à couper allant d'une valeur de qui peut être inférieure à 1000 ampères jusqu'à une valeur supérieure à 10 kA.

**Exposé de l'invention**

L'invention propose donc un dispositif de coupure de courant pour courant électrique continu haute tension, du type comportant :

- une ligne principale entre un point primaire et un point secondaire et comportant au moins un interrupteur primaire, mécanique, interposé dans la ligne principale ;
- un parasurtenseur primaire agencé en parallèle de l'interrupteur primaire ; et
- un circuit d'oscillation agencé électriquement en parallèle de l'interrupteur primaire et électriquement en parallèle du parasurtenseur primaire, le circuit d'oscillation comportant, électriquement en série, au moins une inductance, une capacité et un enclencheur d'oscillation.

Selon un aspect de l'invention, le dispositif comporte, dans le circuit d'oscillation, un dispositif pilotable permettant de varier la valeur de résistance insérée en série dans le circuit d'oscillation.

Un dispositif selon l'invention peut comprendre d'autres caractéristiques optionnelles de l'invention, prises seules ou en combinaison.

[Le dispositif pilotable peut être formé de, ou comporter, au moins un interrupteur de by-pass et une résistance d'amortissement. L'interrupteur de bypass est susceptible de basculer entre un état ouvert et un état fermé, et la résistance d'amortissement et l'interrupteur de by-pass sont agencés de telle sorte que, dans un état de l'interrupteur de by-pass, la résistance d'amortissement est insérée électriquement en série dans le circuit d'oscillation avec l'inductance, la capacité et l'enclencheur d'oscillation du circuit d'oscillation, tandis que, dans l'autre état de l'interrupteur de by-pass, la résistance d'amortissement est court-circuitée par rapport au circuit d'oscillation.

Le circuit d'oscillation peut comporter au moins une résistance permanente, insérée de manière permanente dans le circuit d'oscillation, électriquement en série avec l'inductance, la capacité et l'enclencheur d'oscillation du circuit d'oscillation.

Le circuit d'oscillation peut comporter plusieurs résistances d'amortissement associées chacune à un interrupteur distinct de by-pass de la résistance d'amortissement, chaque interrupteur de by-pass étant susceptible de basculer entre un état ouvert et un état fermé, et une résistance d'amortissement et l'interrupteur de by-pass associé étant agencés de telle sorte que, dans un état de l'interrupteur de circuit-ouvert, la résistance d'amortissement associée à l'interrupteur est insérée électriquement en série dans le circuit d'oscillation avec l'inductance, la capacité et l'enclencheur d'oscillation du circuit d'oscillation, tandis que, dans l'autre état de l'interrupteur de by-pass, la résistance d'amortissement associée à l'interrupteur est court-circuitée par rapport au circuit d'oscillation.

Le dispositif de coupure peut comporter un interrupteur secondaire, mécanique, interposé dans la ligne principale de telle sorte que l'interrupteur primaire et l'interrupteur secondaire sont interposés successivement dans la ligne principale entre le point primaire et le point secondaire mais de part et d'autre d'un point intermédiaire de la ligne principale, les deux interrupteurs mécaniques étant commandés indépendamment chacun entre un état ouvert et un état fermé.

Le dispositif de coupure peut comporter un parasurtenseur secondaire agencé électriquement entre le point intermédiaire et le point secondaire, électriquement en parallèle de l'interrupteur secondaire.

Le dispositif de coupure peut comporter, entre le point primaire et le point secondaire, un circuit capacitif tampon, électriquement en parallèle de l'ensemble formé par l'interrupteur primaire et de l'interrupteur secondaire, et électriquement en parallèle de l'ensemble formé par le parasurtenseur primaire et le parasurtenseur secondaire, le circuit capacitif tampon comportant un interrupteur d'activation et une capacité tampon. Typiquement, le circuit capacitif tampon ne comporte pas de composant inductif dédié.

L'interrupteur d'activation et la capacité tampon peuvent être agencés électriquement en série dans une ligne du circuit capacitif tampon allant du point primaire au point secondaire.

Le circuit capacitif tampon peut comporter un circuit de décharge de la capacité tampon.

Le circuit capacitif tampon peut comporter un parasurtenseur tertiaire agencé en parallèle de l'interrupteur d'activation, par exemple directement aux bornes de l'interrupteur d'activation.

L'interrupteur primaire peut comporter au moins un interrupteur à vide.

L'interrupteur secondaire peut comporter au moins un interrupteur à gaz isolant ou peut comporter au moins un interrupteur à vide.

L'invention concerne aussi un procédé de pilotage d'un dispositif de coupure, caractérisé en ce qu'il comporte la détermination d'une valeur d'intensité d'un courant à couper au travers du dispositif, et la détermination, en fonction de la valeur déterminée d'intensité de courant de défaut, de l'état dans lequel l'au moins un interrupteur de by-pass doit être basculé. Dans un tel procédé, tous les interrupteurs de by-pass du circuit d'oscillation peuvent être basculés simultanément, ou au contraire peuvent être basculés avec un décalage de temps l'un par rapport à l'autre.

**Brève description des dessins**

[Fig. 1] La figure 1 est une vue schématique d'un premier mode de réalisation d'un dispositif de coupure selon l'invention.

[Fig. 2] La figure 2 est une vue schématique d'un deuxième mode de réalisation d'un dispositif de coupure selon l'invention

[Fig. 3] La figure 3 est un graphe illustrant de manière schématique les variations de certaines des grandeurs caractéristiques du fonctionnement d'un dispositif selon le premier mode de réalisation de l'invention, lors d'un processus d'ouverture.

[Fig. 4] La figure 4 est une vue schématique d'une variante de réalisation d'un circuit d'oscillation susceptible d'être mis en oeuvre dans un dispositif de coupure selon l'invention.

[Fig. 5] La figure 5 est une vue schématique d'une autre variante de réalisation d'un circuit d'oscillation susceptible d'être mis en oeuvre dans un dispositif de coupure selon l'invention.

## Description des modes de réalisation

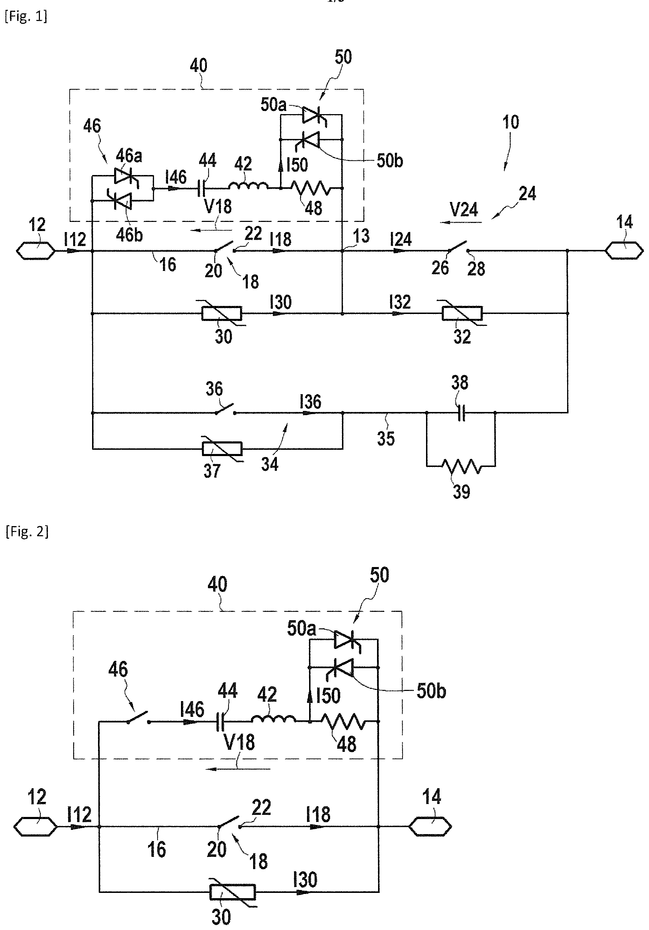

La **Fig. 1** est une représentation schématique d'un premier mode de réalisation d'un dispositif de coupure **10** selon l'invention, pour un courant continu à haute tension, voire à très haute tension.

Comme on peut le voir sur la **Fig. 1**, le dispositif de coupure de courant **10** comporte un point primaire, qui peut être une première borne **12,** et un point secondaire, qui peut être une deuxième borne **14**. Ce point primaire **12** et ce point secondaire **14,** ou bornes, forment des entrées / sorties pour le courant dans le dispositif **10**. Chacun de ces points peut correspondre à une borne physique du dispositif **10,** par exemple une borne de raccordement physique, ou une borne virtuelle du dispositif **10** comme étant un point le long d'un conducteur.

Le dispositif **10** de la **Fig. 1** comporte une ligne principale **16** qui s'étend entre la première borne **12** et la deuxième borne **14** et dans laquelle sont interposés, successivement dans la ligne principale entre le point primaire **12** et le point secondaire **14,** un interrupteur primaire **18,** ayant une première borne **20** et une deuxième borne **22,** et un interrupteur secondaire **24,** ayant lui aussi une première borne **26** et une deuxième borne **28**. La première borne **20** de l'interrupteur primaire **18** est au même potentiel électrique que le point primaire **12**. La deuxième borne **28** de l'interrupteur secondaire **24** est au même potentiel électrique que le point secondaire **14**. La deuxième borne **22** de l'interrupteur primaire **18** et la première borne **28** de l'interrupteur secondaire **24** sont au même potentiel électrique, et au même potentiel électrique qu'un point intermédiaire **13** de la ligne principale **16** qui est agencé entre les deux interrupteurs **18, 24**. Lorsque l'interrupteur primaire **18** et l'interrupteur secondaire **24** sont dans un état fermé, laissant passer le courant électrique, ce dernier circule, au travers du dispositif **10,** dans la ligne principale **16,** qui est alors la ligne de plus faible impédance du dispositif **10** entre le point primaire **12** et le point secondaire **14**. L'un ou l'autre de l'interrupteur primaire **18** et l'interrupteur secondaire **24,** ou les deux, peuvent être basculés dans un état ouvert ou dans un état fermé.

Le dispositif **10** est destiné à être intégré dans une installation électrique. Par exemple, la première borne **12** du dispositif **10** peut être reliée à une portion de d'installation qui peut comprendre une source de haute tension, par exemple supérieure à 100 kilovolts. La deuxième borne **14** peut par exemple être reliée à un circuit consommateur de courant, par exemple une charge électrique ou un réseau électrique. De la sorte, on peut considérer que, dans l'exemple illustré, la première borne **12** est une borne amont, ou d'entrée du courant, tandis que la deuxième borne **14** est une borne aval, ou de sortie du courant, dans le sens de circulation du courant. Ainsi, dans cet exemple, la ligne principale **16** du dispositif serait destinée à être traversée par le courant nominal fourni par la source de tension continue. Cependant, le dispositif **10** selon l'invention est réversible, de sorte que l'on pourrait prévoir une circulation du courant au travers du dispositif selon le sens inverse.

L'installation électrique est prévue pour fonctionner sous une tension nominale continue, dans le domaine de la haute tension, donc au moins supérieure à 1500 Volts, de préférence dans le domaine de la très haute tension, donc supérieure à 75.000 Volts. L'invention trouvera notamment une application avantageuse pour un dispositif de coupure ayant la capacité de couper un courant allant jusqu'à 3000 ampères, de préférence allant jusqu'à 10 000 ampères, voire jusqu'à 20 000 ampères, sous une tension supérieure d'au moins 100 000 volts (100kV).

L'interrupteur primaire **18** et l'interrupteur secondaire **24** peuvent être notamment de type disjoncteur, de type sectionneur, de type coupe-circuit, etc.... Dans les exemples plus particuliers décrits plus bas, l'interrupteur primaire **18** et l'interrupteur secondaire **24** sont par exemple chacun formé par un disjoncteur.

L'interrupteur primaire **18** et l'interrupteur secondaire **24** sont de préférence tous les deux des appareils mécaniques de coupure électrique, dans lesquels la coupure électrique est obtenue par déplacement, notamment par écartement, de deux contacts électriques ou paires de contacts électriques. Dans les appareils mécaniques, le déplacement des contacts électriques est généralement réalisé par des organes de manoeuvre ou actionneurs mécaniques, pneumatiques, hydrauliques ou électriques, éventuellement à travers une cinématique de transfert du mouvement. Ce déplacement peut être contrôlé électroniquement. Comme indiqué plus haut, en présence d'un courant et / ou d'une tension importante, la séparation mécanique des contacts électriques peut se traduire par l'établissement d'un arc électrique entre les deux contacts électriques de l'interrupteur, du fait des énergies importantes accumulées dans le réseau que l'appareil protège. Tant que l'arc électrique reste établi au travers de la séparation mécanique, l'interrupteur ne réalise pas la coupure électrique puisqu'un courant continue de circuler au travers de l'interrupteur par la présence de l'arc. Comme on le verra plus loin, l'invention prévoit des moyens pour assurer la coupure électrique, au sens de l'interruption effective de la circulation du courant électrique.

L'interrupteur primaire **18** et / ou l'interrupteur secondaire **24** peuvent être constitués chacun par un unique appareil mécanique de coupure électrique, ou peuvent être constitués chacun par plusieurs appareils mécaniques de coupure électrique agencés électriquement en série et / ou en parallèle. Il peut s'agir d'un appareil dit « sous enveloppe métallique » où les moyens d'amené de courant (aussi appelés 'jeu de barre') sont enfermés dans une enceinte étanche emplie d'un fluide isolant. Les appareils sous enveloppe métallique peuvent notamment être conçus de manière plus compacte que les appareils où l'isolation est réalisée dans l'air.

Un interrupteur mécanique de coupure électrique peut se présenter sous la forme classique comportant notamment deux électrodes qui sont maintenues, par des supports isolants, dans des positions fixes éloignées de la paroi périphérique d'une enceinte qui est au potentiel de la terre. Ces électrodes sont reliées électriquement ou séparées électriquement en fonction de la position d'un organe de connexion mobile faisant partie de l'une des électrodes, par exemple un tube coulissant actionné par une commande. Le tube est généralement porté par une électrode, à laquelle il est relié électriquement, et la séparation du tube de l'électrode opposée est susceptible de créer un arc électrique qui peut s'allonger lors du mouvement d'ouverture de l'interrupteur au cours duquel le tube s'éloigne de l'électrode opposée. Un interrupteur mécanique de coupure électrique comporte traditionnellement deux couples de contact électriques portés par le tube et les deux électrodes. Le premier couple est celui par lequel passe le courant nominal en position complètement fermée de l'appareil. Ce couple de contact peut être secondé par un second couple de contacts, appelés contact d'arcs ou couple de contacts secondaires. Les deux contacts de ce couple ont vocation à rester en contact franc lors de la séparation du premier couple de façon à minimiser le phénomène d'arc sur le premier et ainsi garantir un bon état de conduction électrique en position complètement fermée. A l'inverse les contacts du couple secondaire se séparent en dernier lieu et voient s'établir l'arc électrique.

Dans certains modes de réalisation, l'interrupteur primaire **18** est un interrupteur sous vide, ou comporte au moins un interrupteur sous vide, où les organes actifs de coupure, notamment les contacts électriques, sont enfermés dans une enceinte étanche dans laquelle la pression est inférieure à la pression atmosphérique, notamment inférieure à 100 millibars, notamment inférieure à 10 microbars. Un tel interrupteur présente l'avantage de pouvoir assurer une coupure électrique complète même dans le cas d'un courant qui présente une forte vitesse de variation d'intensité, c'est pour lesquels la valeur de la dérivée de l'intensité par rapport au temps (dI/dt) est élevée.

Dans certains modes de réalisation de l'invention, l'interrupteur secondaire **24** est un interrupteur à fluide isolant, ou comporte au moins un interrupteur à fluide isolant, notamment à gaz isolant. Ce type d'interrupteurs est particulièrement adapté à l'interruption de courants sous haute tension, encore plus sous très haute tension. Dans un tel appareil, les organes actifs de coupure, notamment les contacts électriques, sont enfermés dans une enceinte étanche dans laquelle on trouve un fluide isolant qui peut être un gaz, couramment de l'hexafluorure de soufre (SF6), mais des liquides ou des huiles peuvent aussi être utilisés. Le fluide isolant peut être un fluide sous pression, par exemple sous une pression supérieure ou égale à 3 bars absolus. Ce fluide est choisi pour son caractère isolant, notamment de manière à présenter une rigidité diélectrique supérieure à celle de l'air sec à pression équivalente.

Ainsi, dans certains modes de réalisation, dont le mode de réalisation qui va être décrit plus en détail plus loin, l'interrupteur primaire **18** est ou comporte un interrupteur sous vide et l'interrupteur secondaire **24** est ou comporte un interrupteur à fluide isolant, notamment à gaz isolant. Cependant, d'autres combinaisons, sont possible, par exemple une combinaison dans laquelle le dispositif comporte un interrupteur primaire et un interrupteur secondaire de même technologie, notamment tous les deux de type interrupteur sous vide.

Comme on peut le voir sur la **Fig. 1,** le dispositif **10** comporte un parasurtenseur primaire **30** agencé en parallèle de l'interrupteur primaire **18** entre le point primaire **12** et le point intermédiaire **13,** donc électriquement en parallèle de l'interrupteur primaire **18,** et un parasurtenseur secondaire **32** agencé électriquement en parallèle de l'interrupteur secondaire **24,** le parasurtenseur secondaire **32** étant donc agencé électriquement entre le point intermédiaire **13** et le point secondaire **14.**

De tels parasurtenseurs permettent de limiter l'amplitude de la différence de potentiel aux bornes de l'interrupteur en parallèle duquel ils sont agencés. Un parasurtenseur **30, 32,** ou « voltage surge arester », est donc un dispositif qui limite les crêtes de tension à ses bornes. Le parasurtenseur **30, 32** comprend généralement un composant électrique qui présente une résistance variable en fonction de la tension électrique à ses bornes. La variation de la valeur de résistance n'est généralement pas linéaire avec la tension électrique aux bornes du parasurtenseur **30, 32.** Généralement, en-dessous d'une tension de transition aux bornes du parasurtenseur **30, 32,** la résistance de celui-ci est importante, avec une décroissance nulle ou relativement faible de sa résistance en fonction de l'augmentation de la tension, et le parasurtenseur ne laisse passer qu'un courant de fuite, de préférence inférieur à 1 ampère (A), voire inférieur à 100 milliampères (mA). Au contraire, au-dessus de la tension de transition aux bornes du parasurtenseur, la résistance de celui-ci décroît rapidement en fonction de l'augmentation de la tension, laquelle atteint une valeur de tension d'écrêtage, ou tension de protection, pour laquelle la résistance du parasurtenseur devient faible, voire très faible. En d'autres termes, le parasurtenseur agit comme un limiteur de tension à ses bornes sur l'intervalle de courant pour lequel il a été choisi. Il oppose la tension de protection lorsqu'on fait passer le courant le plus élevé pour lequel le parasurtenseur a été dimensionné. En deçà de la tension de transition, il tend à empêcher le passage du courant. Au-delà de la tension de transition, il autorise le passage du courant au travers du parasurtenseur pour une faible augmentation de la tension à ses bornes. De manière connue, la tension de transition n'est généralement pas une valeur précise mais correspond plutôt à une plage de tension de transition. Cependant, dans le présent texte, on prendra comme définition que la tension de transtion d'un parasurtenseur est la tension pour laquelle le parasurtenseur laisse passer à son travers un courant de 1A. La tension de protection est la tension aux bornes du parasurtenseur lorsqu'il est traversé par le courant le plus important pour lequel il a été dimensionné. Parmi les parasurtenseurs, on connaît notamment les parafoudres, lesquels peuvent notamment comprendre les varistances (ou varistors) et les diodes « TVS » (Transient Voltage Suppressor, telles que les diodes « Transil™ » (ou diodes « TVS »). Notamment, dans le cadre de l'invention, le parasurtenseur primaire **30** et / ou le parasurtenseur secondaire **32** peuvent comprendre chacun un varistor à oxydes metalliques (ou MOV, signifiant « métal oxyde varistor »).

Avantageusement, comme dans l'exemple qui est illustré, on peut prévoir que le parasurtenseur primaire **30** soit un parasurtenseur dont la tension de transition est par exemple comprise dans la gamme allant de 10 000 volts (10kV) à 100 000 volts (100 kV). Le parasurtenseur secondaire **32** sera généralement un parasurtenseur dont la tension de transition est supérieure à celle du parasurtenseur primaire **30**. Plus précisément, le parasurtenseur présente de préférence une tension de transition de telle sorte que le rapport de tension de transition entre les parasurtenseurs secondaire **32** et primaire **30** se situe entre 1 et 10.

Dans l'exemple de la **Fig. 1,** comportant deux interrupteurs successifs primaire **18** et secondaire **24,** la tension de transition du parasurtenseur primaire **30** est strictement inférieure à la tension nominale de l'installation électrique dans laquelle est inséré le dispositif de coupure **10**. Dans des modes de réalisation particulièrement optimisés, on choisira le parasurtenseur primaire **30** et le parasurtenseur secondaire **32** de telle sorte que la somme de la tension de transition du parasurtenseur primaire **30** avec la tension de transition du parasurtenseur secondaire **32** est supérieure ou égale à tension nominale de l'installation électrique.

Ainsi, dans le contexte d'un dispositif tel que celui de la **Fig. 1,** en choisissant un parasurtenseur primaire **30** dont la tension de protection est une tension inférieure à 200 kV, on s'assure que la tension aux bornes de l'interrupteur primaire **18** reste inférieure ou égale à cette tension de protection, ce qui permet d'utiliser un interrupteur dont le coût et l'encombrement sont très inférieurs aux systèmes équivalents en haute tension. On facilite aussi la coupure électrique au niveau de cet interrupteur primaire **18**.

Le parasurtenseur primaire **30** et / ou le parasurtenseur secondaire **32** peuvent être réalisés chacun sous la forme d'un ensemble de plusieurs composants discrets agencés électriquement en série et / ou en parallèle. Chaque composant discret est par exemple un parafoudre, notamment une varistance, tel qu'un varistor à oxydes métalliques, ou une diode « TVS ». De préférence, l'ensemble de plusieurs composants discrets agencés électriquement en série et / ou en parallèle présente, du point de vue du reste du dispositif le comportement d'une parasurtenseur unique ayant une tension de transition équivalente pour l'ensemble et une tension de protection pour l'ensemble.

La **Fig. 2** est une représentation schématique d'un second mode de réalisation d'un dispositif de coupure **10** selon l'invention, pour un courant continu à haute tension, voire à très haute tension, mais de conception simplifiée. Les éléments communs aux deux modes sont désignés par les même signes de référence, et les détails le concernant qui sont exposés ci-dessus restent applicables à ce second mode de réalisation, sauf indication contraire.

Dans ce mode de réalisation simplifié, le dispositif de coupure **10** comporte uniquement, dans la ligne principale **16** qui s'étend entre la première borne **12** et la deuxième borne **14,** l'interrupteur primaire **18.** Ce mode de réalisation ne comporte donc pas d'interrupteur secondaire tel que décrit dans le premier mode de réalisation. Cela n'empêche pas que l'interrupteur primaire **18** puisse être réalisé sous la forme d'un ensemble de plusieurs interrupteurs électriques agencés en série ou en parallèle, mais qui seront vus, du point de vue du reste du circuit, comme un unique interrupteur. La première borne **20** de l'interrupteur primaire **18** est au même potentiel électrique que le point primaire **12.** La deuxième borne **22** de l'interrupteur primaire **18** est au même potentiel électrique que le point secondaire **14.** Lorsque l'interrupteur primaire **18** est dans un état fermé, laissant passer le courant électrique, ce dernier circule, au travers du dispositif **10,** dans la ligne principale **16,** qui est alors la ligne de plus faible impédance du dispositif **10** entre le point primaire **12** et le point secondaire **14.** L'interrupteur primaire **18** peut être basculé dans un état ouvert ou dans un état fermé.

L'interrupteur primaire **18** est de préférence un appareil mécanique de coupure électrique. L'interrupteur primaire **18** peut être constitué par un unique appareil mécanique de coupure électrique, ou par plusieurs appareills mécaniques de coupure électrique agencés électriquement en série et / ou en parallèle. Il peut s'agir d'un appareil dit « sous enveloppe métallique ». Dans certains modes de réalisation, l'interrupteur primaire **18** est un interrupteur sous vide, ou comporte au moins un interrupteur sous vide.

Comme on peut le voir sur la **Fig. 2,** le dispositif **10** comporte un parasurtenseur primaire **30** agencé en parallèle de l'interrupteur primaire **18** entre le point primaire **12** et le point secondaire **14,** donc électriquement en parallèle de l'interrupteur primaire **18**. Dans ce mode de réalisation comprenant seulement l'interrupteur primaire **18** entre le point primaire **12** et le point secondaire **14,** on peut prévoir que le parasurtenseur primaire **30** présente une tension de transition strictement supérieure ou égale à tension nominale de l'installation électrique.

Selon un aspect de l'invention, commun aux deux modes de réalisation, le dispositif de coupure **10** comporte un circuit d'oscillation **40** qui est agencé électriquement en parallèle de l'interrupteur primaire **18**. On note que le circuit d'oscillation **40** est agencé électriquement en parallèle du parasurtenseur primaire **30**. Le circuit d'oscillation **40** est conçu pour, et apte à générer un passage par zéro du courant au travers de l'interrupteur primaire **18**. Dans le premier mode de réalisation, le circuit d'oscillation **40** est agencé entre le point primaire **12** et le point intermédiaire **13,** pour générer un passage par zéro du courant uniquement au travers de l'interrupteur primaire **18** et pas au travers de l'interrupteur secondaire **24**. Dans le second mode de réalisation de la **Fig. 2,** le circuit d'oscillation **40** est agencé entre le point primaire **12** et le point secondaire **14**.

Un tel circuit d'oscillation **40** a pour but de favoriser la coupure électrique au travers de l'interrupteur primaire **18** lorsque celui-ci est mécaniquement ouvert. En effet, on a vu que même après ouverture d'un tel interrupteur, un arc électrique peut s'être établi entre les contacts séparés de l'interrupteur, empêchant la réalisation d'une coupure électrique effective. Le passage par zéro du courant au travers de l'interrupteur primaire, généré par le circuit d'oscillation **40,** permet de favoriser la coupure électrique au travers de l'interrupteur primaire **18**.

Le circuit d'oscillation **40** comporte au moins une inductance **42**, une capacité **44** et un enclencheur d'oscillation **46,** agencés électriquement en série dans le circuit d'oscillation **40** en parallèle de l'interrupteur primaire **18**, c'est-à-dire entre le point primaire **12** et le point intermédiaire **13** pour le premier mode de réalisation de la **Fig. 1,** et entre le point primaire **12** et le point secondaire **14** pour le second mode de réalisation de la **Fig. 2**. Dans les deux cas, pour le fonctionnement d'un tel circuit d'oscillation **40,** il est avantageux que la capacité **44** soit pré-chargée avant l'enclenchement du circuit d'oscillation **40**. Dans ce cas, le circuit d'oscillation **40** peut comporter, en plus, un circuit de pré-charge de la capacité **44** (non illustré sur les figures).

Selon un aspect de l'invention, le dispositif comporte, dans le circuit d'oscillation **40,** au moins une résistance d'amortissement **48**, électriquement en série avec l'inductance **42**, la capacité **44** et l'enclencheur d'oscillation **46** du circuit d'oscillation **40,** et le circuit d'oscillation **40** comporte un dispositif pilotable permettant de varier la valeur de résistance insérée en série dans le circuit d'oscillation.

Dans les deux exemples de réalisation illustrés aux **Figs. 1** et **2,** on peut ainsi avantageusement prévoir, dans un tel circuit d'oscillation **40,** au moins une résistance d'amortissement **48** et au moins un interrupteur de by-pass **50** de la résistance d'amortissement **48**. L'interrupteur de by-pass **50** est susceptible de basculer entre un état ouvert et un état fermé. La résistance d'amortissement **48** et l'interrupteur de by-pass **50** sont agencés, par exemple en parallèle l'un de l'autre, de telle sorte que, dans un état de l'interrupteur de by-pass **50,** la résistance d'amortissement **48** est électriquement en série dans le circuit d'oscillation **40** avec l'inductance **42**, la capacité **44** et l'enclencheur d'oscillation **46,** tandis que, dans l'autre état de l'interrupteur de by-pass **50,** la résistance d'amortissement **48** est court-circuitée par rapport au circuit d'oscillation **40**.

Dans les exemples des **Figs. 1** et **2,** la résistance d'amortissement **48** est électriquement en série avec l'inductance **42**, la capacité **44** et l'enclencheur d'oscillation **46,** dans une ligne électrique du circuit d'oscillation **40** qui s'étend directement et uniquement en parallèle de l'interrupteur primaire **18**, c'est-à-dire entre le point primaire **12** et le point intermédiaire **13** pour le premier mode de réalisation de la **Fig. 1,** et entre le point primaire **12** et le point secondaire **14** pour le second mode de réalisation de la **Fig. 2**. L'interrupteur de by-pass **50,** est agencé directement et uniquement en parallèle de la résistance d'amortissement **48**. Ainsi, lorsque l'interrupteur de by-pass **50** est dans un état ouvert, la résistance d'amortissement **48** est électriquement en série dans le circuit d'oscillation **40** avec l'inductance **42,** la capacité **44** et l'enclencheur d'oscillation **46,** tandis que, lorsque l'interrupteur de by-pass **50** est dans un état fermé, la résistance d'amortissement **48** est court-circuitée par rapport au circuit d'oscillation **40**.

On note que la résistance d'amortissement **48** peut être réalisée sous la forme d'un ensemble de plusieurs composants discrets agencés électriquement en série et / ou en parallèle. L'interrupteur de bypass associé **50** est alors généralement agencé électriquement en parallèle de l'ensemble.

L'enclencheur d'oscillation **46** est un interrupteur, avantageusement un interrupteur à semi-conducteurs, bien qu'un interrupteur mécanique soit aussi envisageable, notamment dans un dispositif ne comportant que l'interrupteur primaire tel que cela est illustré à la **Fig. 2**. Il est de préférence bidirectionnel. Il peut ainsi être, comme dans l'exemple de la **Fig. 1,** réalisé sous la forme d'un assemblage en parallèle de deux thyristors **46a, 46b** montés tête-bêche. Un tel assemblage est analogue à un TRIAC. Cependant, d'autres composants à semi-conducteurs pourraient être utilisés, comme par exemple des IGBTs ou d'autres types d'éclateurs commandés. Pour des raisons de tenue en tension ou en courant, l'enclencheur d'oscillation **46** peut être réalisé sous la forme d'un ensemble d'interrupteurs agencés électriquement en série et / ou en parallèle mais pouvant de préférence être commandés de manière à se comporter comme un interrupteur unique vis-à-vis du reste du dispositif.

L'interrupteur de by-pass **50** est avantageusement un interrupteur à semi-conducteurs, bien qu'un interrupteur mécanique soit aussi envisageable. Il est de préférence bidirectionnel. Il peut ainsi être, comme dans les exemples des **Figs. 1** et **2,** réalisé sous la forme d'un assemblage en parallèle de deux thyristors **50a, 50b** montés tête-bêche. Un tel assemblage est analogue à un TRIAC. Cependant, d'autres composants à semi-conducteurs pourraient être utilisés, comme par exemple des IGBTs ou d'autres types d'éclateurs commandés. Pour des raisons de tenue en tension ou en courant, l'interrupteur de by-pass **50** peut être réalisé sous la forme d'un ensemble d'interrupteurs agencés électriquement en série et / ou en parallèle mais pouvant de préférence être commandés de manière à se comporter comme un interrupteur unique vis-à-vis du reste du dispositif.

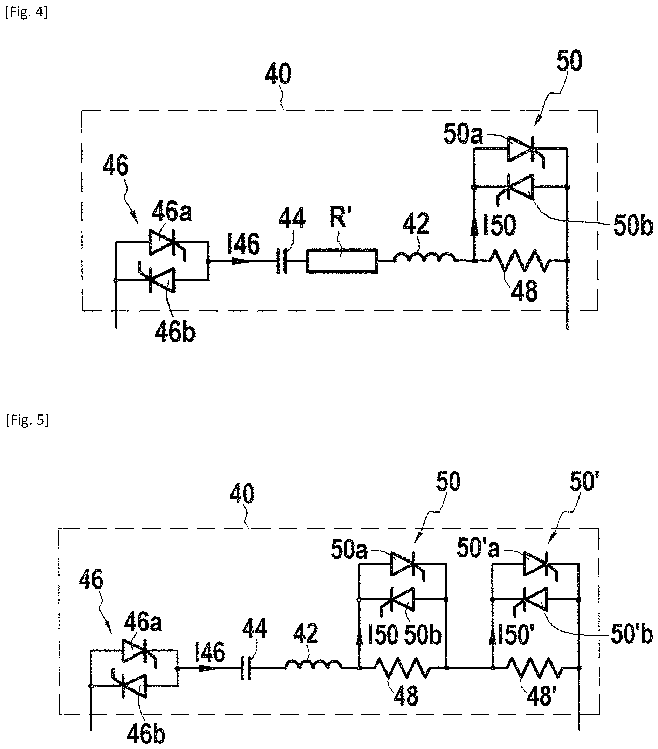

A la **Fig. 4,** on a illustré une première variante de réalisation d'un circuit d'oscillation **40** pour un dispositif de coupure **10** selon l'invention. Dans cette variante, le circuit d'oscillation **40** comporte au moins une résistance permanente **R',** insérée de manière permanente dans le circuit d'oscillation **40**, électriquement en série avec l'inductance **42**, la capacité **44** et l'enclencheur d'oscillation **46**. Cette résistance permanente **R'** n'est pas associée à un interrupteur de by-pass. Dans cet exemple, la résistance permanente **R'** détermine une valeur minimum de résistance du circuit oscillant, lorsque la résistance d'amortissement **48** est court-circuitée par rapport au circuit d'oscillation **40**. Lorsque la résistance d'amortissement **48** est insérée dans le circuit d'oscillation **40**, c'est-à-dire dans l'exemple lorsque l'interrupteur de by-pass **50** associé est ouvert, la valeur de résistance du circuit oscillant est déterminée par la somme des valeurs de résistance électrique de la résistance permanente **R'** et de la résistance d'amortissement **48**. La résistance permanente **R'** peut être réalisée sous la forme d'un ensemble de plusieurs composants discrets agencés électriquement en série et / ou en parallèle.

A la **Fig. 5,** on a illustré une seconde variante de réalisation d'un circuit d'oscillation **40** pour un dispositif de coupure **10** selon l'invention. Dans cette variante, le circuit d'oscillation **40** comporte au moins une seconde résistance d'amortissement **48'** et au moins un second interrupteur de by-pass **50'** associé à la seconde résistance d'amortissement **48**. Le second interrupteur de by-pass **50'** est susceptible de basculer entre un état ouvert et un état fermé. La seconde résistance d'amortissement **48'** et le second interrupteur de by-pass **50'** sont agencés, ici en parallèle l'un de l'autre, de telle sorte que, dans un état du second interrupteur de by-pass **50'**, la seconde résistance d'amortissement **48'** est électriquement en série dans le circuit d'oscillation **40** avec l'inductance **42**, la capacité **44** et l'enclencheur d'oscillation **46,** et avec la première résistance d'amortissement **48** si celle-ci est insérée dans le circuit d'amortissement **40**. Dans l'autre état du second interrupteur de by-pass **50',** la seconde résistance d'amortissement **48'** est court-circuitée par rapport au circuit d'oscillation **40**. Lorsque les deux résistances d'amortissement **48, 48'** sont insérées dans le circuit d'oscillation **40**, c'est-à-dire dans l'exemple lorsque les deux interrupteurs de by-pass **50, 50'** associés sont ouverts, la valeur de résistance du circuit oscillant est déterminée par la somme des valeurs de résistance électrique des deux résistances d'amortissement **48, 48'**.

Bien entendu, on peut généraliser la variante de la **Fig. 5** à plus de deux résistances d'amortissement, et par conséquent plus de deux interrupteurs de by-pass. Ainsi, le circuit d'oscillation **40** peut comporter plusieurs résistances d'amortissement associées chacunes à un interrupteur distinct de by-pass de la résistance d'amortissement, chaque interrupteur de by-pass étant susceptible de basculer entre un état ouvert et un état fermé. Une résistance d'amortissement et l'interrupteur de by-pass associés sont alors agencés, par exemple en parallèle l'un de l'autre, de telle sorte que, dans un état de l'interrupteur de by-pass, la résistance d'amortissement associée à l'interrupteur est insérée électriquement en série dans le circuit d'oscillation **40** avec l'inductance **42**, la capacité **44** et l'enclencheur d'oscillation **46,** tandis que, dans l'autre état de l'interrupteur de bypass, la résistance d'amortissement associée à l'interrupteur est court-circuitée par rapport au circuit d'oscillation **40**.

En ayant plusieurs résistance d'amortissement associées chacune à un interrupteur de by-pass, on peut prévoir que les interrupteurs de by-pass soient commandés simultanément. On peut au contraire prévoir que certains au moins des interrupteurs de by-pass du circuit d'oscillation soient basculés avec un décalage de temps l'un par rapport à l'autre. Ainsi, on peut adapter la valeur totale de résistance du circuit oscillant à plus de deux paliers de valeur de résistance.

On note que les deux variantes des **Figs. 4** et **5** peuvent être combinées dans un circuit d'oscillation comportant à la fois au moins une résistance permanente et plusieurs résistances d'amortissement, toutes étant insérées en série ou susceptibles d'être insérées en série les unes avec les autres dans le circuit d'oscillation.

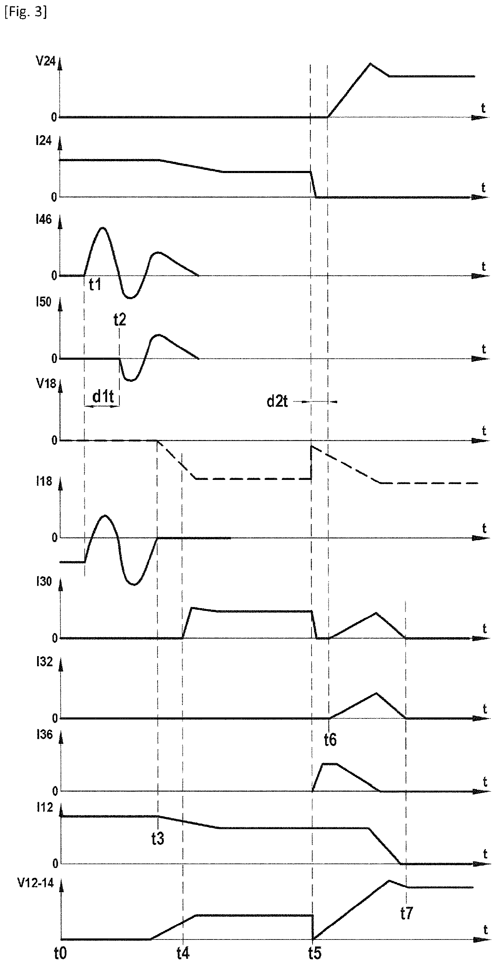

Le rôle et l'avantage de la présence d'un tel circuit d'oscillation **40** apparaitra notamment de la description du fonctionnement d'un dispositif qui en est muni. On se reportera pour cela à la **Fig. 3,** qui illustre les variations de certains paramètres dans le dispositif de la **Fig. 1** lors d'une opération de coupure mise en oeuvre à l'aide d'un tel dispositif de coupure **10**. Cependant, avant décrire le rôle et l'avantage de la présence d'un tel circuit d'oscillation **40,** on décrit ci-après des éléments complémentaires pour différentes variantes d'un dispositif de coupure **10** dans son ensemble. Ces éléments complémentaires sont optionnels.

Dans certains modes de réalisation, tel que celui de la **Fig. 1,** le dispositif de coupure selon l'invention **10** peut comporter, entre le point primaire **12** et le point secondaire **14,** un circuit capacitif tampon **34,** sans composant inductif dédié, électriquement en parallèle de l'ensemble formé par l'interrupteur primaire **18** et l'interrupteur secondaire **24,** et électriquement en parallèle de l'ensemble formé par le parasurtenseur primaire **30** et le parasurtenseur secondaire **32**. Ce circuit capacitif tampon **34** comporte un interrupteur d'activation **36** et une capacité tampon **38**. Dans l'exemple illustré, ce circuit comprend donc une ligne électrique **35** dont une extrémité est raccordée électriquement à la ligne principale **16** en un point qui est au même potentiel électrique que le point primaire **12** et que la première borne **20** de l'interrupteur primaire **18,** et dont l'autre extrémité est raccordée électriquement à la ligne principale **16** en un point qui est au même potentiel électrique que le point secondaire **14** et que la deuxième borne **28** de l'interrupteur secondaire **24**. C'est dans cette ligne **35** que sont interposés, électriquement en série, l'interrupteur d'activation **36** et la capacité tampon **38.** La capacité tampon **38** peut par exemple comprendre ou être formée d'un ou plusieurs condensateurs ayant une capacité électrique totale C38.

Le circuit capacitif tampon **34** peut présenter, comme tout circuit, une inductance parasite, résultant notamment de la nature même de composants électriques qu'il comprend, et résultant de la géométrie du circuit. Cependant, dans l'exemple de réalisation, ce circuit capacitif tampon **34** ne comporte aucun composant inductif dédié, c'est-à-dire aucun composant discret ayant une fonction inductive recherchée, donc aucun composant ayant une inductance supérieure à une inductance parasite, notamment aucune bobine ou aucun noyau ferromagnétique inductif. Le circuit capacitif tampon peut ainsi présenter une inductance très faible, par exemple inférieure à 50 microhenrys ou inférieure à 1 microhenry par tranche de 10 kilovolts de tension nominale du réseau.

Dans certains modes de réalisation, tels que celui de la **Fig. 1,** le circuit capacitif tampon **34** peut comporter un circuit de décharge de la capacité tampon **38.** Dans l'exemple de la **Fig. 1,** le circuit de décharge est un circuit de décharge passif, ne comportant pas de composant actif. Dans cet exemple, le circuit de décharge comporte une résistance **39** qui est agencée en parallèle de la capacité tampon **38.** De préférence, la résistance **39** présente une valeur de résistance électrique R39 élevée de telle sorte que le dipôle qui est constitué de la capacité tampon **38** et de la résistance **39** agencés en parallèle, et qui est inséré dans la ligne électrique **35,** présente une constante de temps importante par rapport à un délai de coupure électrique dans l'interrupteur secondaire **24,** par exemple une constante de temps supérieure à 50 millisecondes, de préférence supérieure à 100 millisecondes. Dans cet exemple la constante de temps est égale au produit R39 x C38. Un autre type de circuit de décharge, non illustré, peut comporter au moins un composant actif, tel qu'un interrupteur commandé. Ainsi, un circuit de décharge pourrait comprendre un interrupteur commandé qui serait agencé directement en série électriquement avec la résistance **39,** l'ensemble de ces deux composants étant en parallèle de la capacité tampon **38.** Lorsque l'interrupteur commandé serait basculé dans un état fermé laissant passer le courant, il se formerait un circuit de décharge entre les deux armatures du condensateur tampon **38.**

Dans le mode de réalisation de la **Fig. 1,** on note la présence optionnelle, dans le circuit capacitif tampon **34,** d'un parasurtenseur tertiaire **37** agencé en parallèle de l'interrupteur d'activation **36.** Ce parasurtenseur tertiaire **37** peut avantageusement être, comme illustré, agencé directement et uniquement aux bornes de l'interrupteur d'activation **36,** au sens qu'il est au contraire agencé, dans la ligne **35** du circuit capacitif tampon **34,** électriquement en série avec la capacité tampon **38.** Le parasurtenseur tertiaire **37** peut être avantageusement dimensionné pour limiter la tension aux bornes de l'interrupteur d'activation **36.** Par exemple, on peut choisir un parasurtenseur dont la tension de protection est dans la gamme allant de 10 000 volts (10kV) à 100 000 volts (100 kV). Ainsi, en choisissant un parasurtenseur tertiaire **37** dont la tension de protection est dans cette gamme de tensions, on s'assure que la tension aux bornes de l'interrupteur d'activation **36** reste dans cette gamme de tensions, ce qui permet d'utiliser un interrupteur dont le coût et l'encombrement sont très inférieurs aux systèmes équivalents à plus haute tension.

Toutefois, en cas de présence d'un tel parasurtenseur tertiaire **37** dans le circuit capacitif tampon **40,** on veillera de préférence à choisir un parasurtenseur tertiaire dont la tension de transition est supérieure à la tension de protection du parasurtenseur primaire **30.**

Sur la **Fig. 3,** on a illustré, pour un dispositif de coupure tel qu'illustré à la **Fig.** 1 passant d'un état fermé permettant le passage du courant au travers du dispositif, à un état ouvert isolant électriquement le point primaire **12** du point secondaire **14,** la variation en fonction du temps, des paramètres suivants :

- la tension **V24** aux bornes de l'interrupteur secondaire **24** ;
- l'intensité **I24** du courant au travers de l'interrupteur secondaire **24 ;**
- l'intensité **I46** du courant au travers de l'enclencheur d'oscillation **46** ;
- l'intensité **I50** du courant au travers de l'interrupteur de by-pass **50** ;
- la tension **V18** aux bornes de l'interrupteur primaire **18** ;
- l'intensité **I18** du courant au travers de l'interrupteur primaire **18** ;
- l'intensité **I130** du courant au travers du parasurtenseur primaire **30** ;
- l'intensité **I32** du courant au travers du parasurtenseur secondaire **32** ;
- l'intensité **I12** du courant au travers du dispositif **10 ;** et
- la tension V1214 aux bornes du dispositif **10.**

Dans un procédé de pilotage d'un dispositif de coupure **10** selon l'invention, en vue d'amener le dispositif de son état fermé à son état ouvert, on prévoit une étape comprenant l'ouverture mécanique de l'interrupteur primaire 18, et pour le mode de réalisation de la **Fig. 1,** de l'interrupteur secondaire **24.** Les deux interrupteurs peuvent être ouverts mécaniquement simultanément, ou successivement dans un ordre quelconque. Dans l'exemple de la **Fig. 3,** on prend l'hypothèse que cette ouverture est effective à un instant **t0.** L'étape d'ouverture du ou des deux interrupteurs peut être déclenchée sous charge normale, par exemple avec un courant nominal prévu au travers du dispositif **10,** par une simple volonté d'ouverture du dispositif de coupure en vue par exemple d'isoler électriquement une partie d'installation électrique reliée électriquement au point primaire **12** du dispositif **10** par rapport à une autre partie d'installation électrique reliée électriquement au point secondaire **14** du dispositif **10.** L'étape d'ouverture du ou des deux interrupteurs peut être déclenchée en présence d'un défaut électrique dans l'installation électrique, par exemple avec un courant de défaut au travers du dispositif de coupure **10.** Ce courant de défaut peut être supérieur au courant nominal maximal prévu au travers du dispositif **10.** Une telle ouverture en présence d'un défaut peut résulter de la détection de ce défaut, notamment de la détection d'un ou plusieurs paramètres du courant au travers du dispositif **10,** par exemple l'intensité du courant au travers du dispositif **10.** On note que, comme décrit précédemment, il se peut que l'ouverture mécanique du ou des deux interrupteurs **18, 24** ne permette pas, à elle seule l'ouverture électrique au sens de l'interruption du passage du courant au travers du dispositif de coupure **10,** par la faute de l'établissement d'un arc électrique au travers de l'interrupteur primaire 18 ou de chacun de deux interrupteurs. Pour la description du procédé qui va suivre, on se place justement dans cette hypothèse.

Dans cette hypothèse, le procédé prévoit de couper le courant dans l'interrupteur primaire **18** ouvert pour provoquer l'apparition, aux bornes de l'interrupteur primaire, d'une tension supérieure à la tension de transition du parasurtenseur primaire **30** propre à le faire basculer dans un mode de conduction de courant.

Selon un aspect de l'invention, pour couper le courant dans l'interrupteur primaire **18** ouvert, on fait usage de l'une ou l'autre des variantes de circuits d'oscillation **40** telles que décrites plus haut, selon ce qui sera décrit plus bas. Dans l'exemple de la **Fig. 3,** la mise en oeuvre du circuit d'oscillation **40** commence à un instant **t1** correspondant à la fermeture de l'enclencheur d'oscillation **46,** et on prend l'hypothèse que cette ouverture électrique de l'interrupteur primaire **18** est effective à l'instant **t3.**

Pour ce faire, il est proposé de mettre en oeuvre un circuit d'oscillation **40** tel qu'illustré aux **Figs. 1** et **2,** ou aux **Figs. 4** ou **5.** et tel que décrit plus haut. En effet, grâce à un tel dispositif, il est possible d'insérer, au choix, de manière pilotable, et éventuellement temporairement, au moins un résistance d'amortissement **48** dans la boucle d'oscillation formée par le circuit d'oscillation **40** et la partie de ligne principale **16** qui inclue l'interrupteur primaire **18.** Ainsi, sans changer la capacité d'oscillation **44,** ni son niveau de chargement initial, et sans changer l'inductance **42,** il devient possible, à moindre frais, de modifier le courant d'oscillation qui est injecté dans la boucle d'oscillation par le circuit d'oscillation **40.**

Dans certains modes de réalisation décrits, la présence de l'interrupteur de by-pass **50** associé à une résistance d'amortissement **48** permet, instantanément, de transformer le circuit d'oscillation **40** d'un circuit RLC en série en un circuit LC en série, ou inversement. Dans d'autres modes de réalisation, la présence de l'interrupteur de by-pass **50** associé à une résistance d'amortissement **48** permet, instantanément, de transformer le circuit d'oscillation **40** d'un circuit RLC en série en un autre circuit RLC en série avec une valeur totale de résistance électrique différente.

Ainsi, en fonction du courant de défaut qui circule dans la ligne principale **16,** il est possible, en vue assurer la coupure électrique effective dans l'interrupteur primaire **18,** d'injecter dans la boucle d'oscillation, un courant d'oscillation résultant soit de la décharge d'un circuit RLC en série, soit de la décharge d'un circuit LC en série, soit de la décharge d'un autre circuit RLC en série avec une valeur totale de résistance électrique différente.

De la sorte, on peut prévoir un procédé de pilotage d'un dispositif de coupure **10** comportant un circuit d'oscillation **40** tel qu'illustré aux **Figs. 1** et **2,** ou aux **Figs. 4** ou **5,** comportant, à un instant donné, la détermination d'au moins un paramètre d'un courant à couper au travers du dispositif, par exemple la détermination d'une valeur d'intensité de ce courant. Cette détermination peut être directe, par exemple par la présence d'un capteur d'intensité de courant dans la partie de ligne principale **16** qui inclut l'interrupteur primaire **18.** Cette détermination peut être indirecte, par exemple par analyse d'autres paramètres du dispositif de coupure ou de l'installation. Cette détermination peut combiner à la fois une détermination directe et une détermination indirecte. Cette détermination peut être faite avant le début du processus d'ouverture du dispositif de coupure, notamment avant toute ouverture mécanique de l'interrupteur primaire **18.** Cette détermination peut être faite après le début du processus d'ouverture du dispositif de coupure, notamment après l'ouverture mécanique de l'interrupteur primaire **18.** Bien entendu, il est aussi possible de prendre en compte, pour cette détermination, des paramètres déterminés avant et après le début du processus d'ouverture du dispositif de coupure **10.**

Sur la base de cette détermination, par exemple en fonction de la valeur déterminée d'intensité de courant de défaut, le procédé de pilotage peut déterminer l'état dans lequel l'interrupteur de by-pass **50** associé à la résistance d'amortissement **48,** ou à une résistance d'amortissement **48,** doit être basculé, et notamment si et quand il doit être basculé, ceci afin d'adapter la valeur totale de résistance électrique du circuit d'oscillation **40.**

Dans l'exemple illustré à la **Fig. 3,** se rapportant plus particulièrement au fonctionnement d'un dispositif tel qu'illustré à la **Fig. 1,** on a illustré le cas où le circuit d'oscillation **40** est activé par la fermeture de l'enclencheur d'oscillation **46** à un instant **t1.** A cet instant, et dans les instants qui suivent immédiatement, on note que le courant **I50** au travers de l'interrupteur de by-pass **50** reste à zéro, ce qui témoigne de l'état ouvert de l'interrupteur de by-pass **50,** jusqu'à un instant **t2.** Ainsi, entre les instants **t1** et **t2,** la résistance d'amortissement **48** se trouve effectivement insérée dans le circuit d'oscillation **40,** lequel est alors un circuit RLC série. Ainsi, le début de la décharge de la capacité d'oscillation **44** correspond à la décharge d'un circuit RLC en série. A partir de l'instant **t2,** l'interrupteur de by-pass **50** est basculé dans son état fermé, de manière à courtcircuiter la résistance d'amortissement **48.** Ainsi, la suite de la décharge de la capacité d'oscillation **44** correspond à la décharge d'un circuit LC en série.

Bien entendu, il possible de déterminer la durée de l'intervalle de temps **dit** entre les instants **t1** et **t2,** intervalle de temps pendant lequel la résistance d'amortissement **48** est effectivement insérée dans le circuit d'oscillation **40.** Cette durée **dit** peut être prédéterminée, ou elle peut être déterminée en fonction de certains paramètres du courant électrique dans le dispositif, notamment en fonction de paramètres du courant de défaut au travers de l'interrupteur primaire **18.**

Ainsi, le dispositif de coupure **10** comportant un circuit d'oscillation **40** selon l'invention, peut être piloté de telle sorte que, au moment de la fermeture de l'interrupteur enclencheur **46,** au moins résistance d'amortissement **48** soit insérée dans le circuit d'oscillation **40,** ou qu'elle soit au contraire court-circuitée par rapport à ce circuit. Lorsqu'une résistance d'amortissement **48** est insérée dans le circuit d'oscillation **40,** elle permet notamment de limiter la vitesse de variation de l'intensité d(I18)/dt du courant généré par le circuit d'oscillation **40** dans l'interrupteur primaire **18** au début de la décharge de la capacité d'oscillation **44.** Dans les cas où la résistance d'amortissement 48 est insérée effectivement dans le circuit d'oscillation au moment de la fermeture de l'interrupteur enclencheur **46,** on peut choisir qu'elle soit court-circuitée après un certain intervalle de temps, comme illustré à la **Fig. 3,** y compris avant que la coupure électrique ne soit effective dans l'interrupteur primaire **18,** ou au contraire choisir de la maintenir insérée dans le circuit d'oscillation pendant toute la durée d'activation du circuit d'oscillation **40.**

Pour un dispositif tel qu'illustré sur la **Fig. 1,** on a déterminé une relation optimale entre les paramètres caractéristiques du circuit d'oscillation

$$[\text{Math. 1}] \quad d1t = \ln\left(\frac{V44i^2 * C44}{Idef^2 * L42 + (dI18/dt)max^{\,2} * L42^2 * C44}\right) * \frac{L42}{R48}$$

avec

- **d1t:** Intervalle du temps pendant lequel la résistance d'amortissement **48** est effectivement insérée dans le circuit d'oscillation **40** ;
- (dI18/dt)max : valeur maximum de dI18/dt au passage à zéro du courant dans l'interrupteur primaire 18 pour laquelle l'interrupteur primaire **18** peux, à lui seul assurer une coupure électrique ;
- V44i : Tension initiale aux bornes de la capacité **44** du circuit d'oscillation ;
- Idef : Amplitude de courant à couper au travers du dispositif **10** ;
- R48 : valeur de résistance électrique de la résistance d'amortissement **48** ;
- C44 : valeur de capacité de la capacité **44** du circuit d'oscillation **40** ;
- L72 : Valeur d'inductance de l'inductance **42** du circuit d'oscillation **40.**

Dans un dispositif de coupure tel qu'illustré à la **Fig. 2,** ne comportant que l'interrupteur primaire **18,** cette coupure du courant au travers de l'interrupteur primaire **18** permet qu'une tension peut apparaitre à ses bornes. Cette tension se répercute aux bornes du parasurtenseur primaire **30,** qui peut alors jouer son rôle de limitation de la tension aux bornes de l'interrupteur primaire **18,** limitant le risque de rallumage de l'arc électrique. La tension de protection du parasurtenseur primaire **30** est supérieure à la tension nominale du réseau tant qu'il y a du courant qui traverse le parasurtenseur, c'est-à-dire tant que le courant 130 est différent de zéro. Ceci va de pair avec l'absorption d'énergie dans le réseau. Une fois cette énergie aborbée, on considère que le dispositif de coupure **10** de la **Fig. 2** est ouvert, car seul un courant de fuite peut circuler au travers du dispositif **10** en passant par le parasurtenseur primaire **30.** Pour cela, on note que la tension aux bornes du dispositif de coupure **10** est alors égale à la tension aux bornes du parasurtenseur primaire **30.** Cette tension, en régime établi lorsque le dispositif de coupure **10** est ouvert, sera généralement égale à la tension nominale de l'installation. Il est donc judicieux de choisir le parasurtenseur primaire **30** de telle sorte que sa tension de transition soit supérieure ou égale à la tension nominale de l'installation.

Dans un dispositif de coupure tel qu'illustré à la **Fig. 1,** cette coupure du courant au travers de l'interrupteur primaire **18** force le courant au travers du dispositif **10** à charger le condensateur **44,** provoquant une montée de tension à ses bornes, ce qui se traduit par l'apparition de cette même tension aux bornes du parasurtenseur primaire **30,** et donc de la même tension aux bornes de l'interrupteur primaire **18.** Dans l'hypothèse d'un courant de défaut important, cette tension atteint, à un instant **t4** sur la **Fig. 3,** la tension de transition du parasurtenseur primaire **30,** lequel voit alors sa résistance varier pour limiter l'augmentation de la tension, laquelle atteint un palier. A ce stade, on considère que le parasurtenseur **30** devient passant pour le courant. Ainsi, on peut considérer que, à partir de l'instant **t4,** le courant au travers du dispositif **10** passe au travers du parasurtenseur primaire **30** mais continue de circuler au travers de l'interrupteur secondaire **24** du fait de la présence d'un arc électrique entre les contacts de ce dernier.

Dans tous les cas, on s'aperçoit que la valeur de résistance électrique de la résistance d'amortissement **48** n'a pas besoin d'être importante. Donc le ou les composants formant la ou les résistances d'amortissement peuvent être compacts et peu onéreux. De plus, grâce à cette faible valeur de résistance, la valeur de tension imposée à l'interrupteur de by-pass **50** associé à la résistance est elle aussi relativement faible, Donc le ou les composants formant le ou les interrupteur de by-pass **50** peuvent être compacts et peu onéreux.

Pour provoquer la coupure de l'arc électrique dans l'interrupteur secondaire **24,** on active le circuit capacitif tampon **34** en fermant l'interrupteur d'activation **36,** ce qui correspond à l'instant **t5** sur la **Fig. 3.** Autrement dit, on bascule l'interrupteur d'activation **36** pour permettre, dans le circuit capacitif tampon **34,** le passage d'un courant propre à charger la capacité tampon **38** et à délester le courant dans l'interrupteur secondaire **24.** A l'état initial, la capacité tampon **38** est déchargée, par exemple par la présence du circuit de décharge qui est ici réalisé par la résistance de décharge **39.** De ce fait, et du fait de la présence d'une différence de potentiel aux bornes du parasurtenseur primaire **30,** le courant au travers du dispositif **10** bascule vers le circuit tampon **34** pour charger la capacité tampon **38.** Dans un premier temps, on considère que, dans l'exemple illustré, la valeur de résistance R39 de la résistance **39** est suffisamment importante pour négliger le courant de décharge au travers de la résistance. A contrario, la valeur de l'impédance électrique du circuit capacitif tampon **34** est très inférieure à celle que le courant emprunte avant t5. Ce temps de chargement de la capacité tampon **38,** dont on peut considérer qu'il dure jusqu'à l'instant **t6** sur la **Fig. 3,** est particulièrement important car, pendant ce temps, le courant à travers le dispositif **10** est pour l'essentiel conduit par le circuit tampon **34,** sous la forme du courant I36 au travers de l'interrupteur d'activation **36,** ce qui a pour conséquence de faire baisser, voire d'annuler le courant qui circulait au travers de l'interrupteur secondaire **24,** dont il faut rappeler qu'il est en état de coupure mécanique, avec ses contacts séparés l'un de l'autre. Cette baisse, voire annulation, du courant I24 au travers de l'interrupteur secondaire **24** va avantageusement provoquer l'extinction de l'arc électrique dans l'interrupteur secondaire **24.** On note que l'intervalle de temps à partir de l'instant **t5** pendant lequel le courant doit être dévié de l'interrupteur secondaire **24** vers le circuit tampon **34** n'a pas besoin d'être très long, il suffit que ce temps, pendant lequel le circuit capacitif tampon **34** conduit le courant, soit supérieur au temps nécessaire à la dé-ionisation du gaz présent entre les contacts séparés de l'interrupteur secondaire **24.** En effet, une fois que le gaz est dé-ionisé, l'écartement des contacts de l'interrupteur secondaire **24** suffit à empêcher le rallumage de l'arc. Cette durée est de l'ordre de quelques microsecondes, de préférence inférieure à 20 microsecondes.

Cette durée de diversion **d2t,** allant de l'instant **t5** à l'instant **t6,** pendant laquelle on constate une baisse, voire une annulation, du courant I24 au travers de l'interrupteur secondaire **24,** peut être ajustée à la durée nécessaire par un bon dimensionnement des composants du circuit. De manière générale, une augmentation de la capacité électrique totale C38 de la capacité tampon **38** aura tendance à augmenter cette durée de diversion.

En première approximation, on peut considérer que la durée de diversion **d2t,** allant de l'instant **t5** à l'instant **t6,** est régie par la loi suivante :

$$\mathbf{d2t} = \text{Vt30} \times \text{C38} / \text{Idef}$$

avec :

    **d2t** la durée de diversion souhaitée ;
    Vt30 la tension de transition du parasurtenseur primaire **30** ;
    C38 la capacité électrique totale de la capacité tampon **38** ;
    Idef la valeur du courant de défaut au travers du dispositif.

Ainsi, à titre indicatif, il a été déterminé qu'une valeur avantageuse de la capacité électrique totale C38 de la capacité tampon **38** pouvait être déterminée en veillant à ce que cette valeur soit égale ou supérieure à la durée de diversion **d2t** souhaitée multipliée par Idefmax la valeur maximale de courant de défaut attendue au travers du dispositif, divisée par Vt30 la tension de transition du parasurtenseur primaire **30,** soit :

$$\text{C38} = \mathbf{d2t} \times \text{Idefmax} / \text{Vt30}$$

Au-delà de l'instant **t6,** on considère que l'interrupteur secondaire **24** est ouvert électriquement et qu'une tension peut apparaitre à ses bornes sans risque de rallumage de l'arc électrique. Cette tension se répercute aux bornes du parasurtenseur secondaire **32,** qui peut alors jouer son rôle de limitation de la tension aux bornes de l'interrupteur secondaire. La somme des tensions aux bornes des parasurtenseurs **30** et **32** est la tension V1214. Cette somme de tension peut être supérieure à la tension nominale du réseau tant qu'il y a du courant qui traverse les parasurtenseurs, c'est-à-dire tant que le courant I32 est différent de zéro. Ceci va de pair avec l'absorption d'énergie dans le réseau.

A partir de l'instant **t7,** on considère que le dispositif de coupure **10** est ouvert, car seul un courant de fuite peut circuler au travers du dispositif **10** en passant par le parasurtenseur primaire **30** et par le parasurtenseur secondaire **32.**

Pour cela, on note que la tension aux bornes du dispositif de coupure **10** est la somme des tensions aux bornes du parasurtenseur primaire **30** et aux bornes du parasurtenseur secondaire **32.** Cette tension, en régime établi lorsque le dispositif de coupure **10** est ouvert, sera généralement égale à la tension nominale de l'installation. Il est donc judicieux de choisir le parasurtenseur primaire **30** et par le parasurtenseur secondaire **32** de telle sorte que la somme de leur tension de transition soit supérieure ou égale à la tension nominale de l'installation.

On notera que le dispositif de coupure **10** selon l'invention peut être associé, dans l'installation électrique, électriquement en série avec un autre dispositif de coupure, par exemple de type sectionneur, apte à interrompre complètement et de manière fiable le courant dans la ligne. Cet autre dispositif de coupure pourra être dimensionné pour optimiser son pouvoir d'isolation, sans devoir optimiser sa capacité d'interruption du courant puisque cette fonction sera prioritairement assurée par le dispositif de coupure selon l'invention.

On note par ailleurs que le dispositif de coupure selon l'invention est un dispositif bidirectionnel, apte à interrompre un courant circulant au travers du dispositif quel que soit son sens de circulation, donc dans les deux sens au travers du dispositif. De ce fait, un tel dispositif de coupure pourra être mis en oeuvre dans une installation comportant un réseau maillé, dans une ligne dans laquelle le courant continu peut circuler, suivant la configuration du réseau à un moment donné, dans un sens ou dans un autre.

Un dispositif selon l'invention permet donc d'assurer une ouverture électrique rapide et certaine, pour arrêter la circulation d'un courant de défaut de haute intensité (notamment plus de 10 kA), sous une haute tension, notamment supérieure à 100 kV. Cependant, une fois le dispositif ouvert, il est nécessaire de pouvoir refermer électriquement le dispositif de coupure **10** pour permettre le rétablissement du courant si on pense avoir résolu l'origine du défaut. Dans le cas du dispositif de la **Fig. 1,** on pilote le dispositif **10** de manière à fermer mécaniquement l'interrupteur primaire **18** et l'interrupteur secondaire **24,** de préférence successivement et dans cet ordre, donc en fermant mécaniquement l'interrupteur primaire **18** avant l'interrupteur secondaire **24.** En effet, on note que, en respectant cet ordre, le parasurtenseur secondaire **32** permet de limiter le courant d'appel lorsque l'interrupteur primaire **18** est refermé mécaniquement.

Dès la fermeture de l'interrupteur primaire **18,** on peut déterminer un ou plusieurs paramètres du courant au travers du dispositif de coupure **10** et / ou de la tension phase-terre, ou dans l'installation, notamment pour vérifier que le défaut a bien été éliminé. Cependant, il se peut que le défaut n'ait pas été éliminé. Ainsi, en fonction des paramètres détectés pour le courant au travers du dispositif et / ou la tension phase-terre, on peut provoquer une réouverture immédiate du dispositif sans attendre la refermeture de l'interrupteur secondaire **24** qui constituerait une refermeture complète du dispositif **10.**

## Revendications

**1.** Dispositif **(10)** de coupure de courant pour courant électrique continu haute tension, du type comportant :

- une ligne principale **(16)** entre un point primaire **(12)** et un point secondaire **(14)** et comportant au moins un interrupteur primaire **(18),** mécanique, interposé dans la ligne principale **(16)** ;
- un parasurtenseur primaire **(30)** agencé en parallèle de l'interrupteur primaire **(18)** ; et
- un circuit d'oscillation **(40)** agencé électriquement en parallèle de l'interrupteur primaire **(18)** et électriquement en parallèle du parasurtenseur primaire **(30),** le circuit d'oscillation **(40)** comportant, électriquement en série, au moins une inductance **(42),** une capacité **(44)** et un enclencheur d'oscillation **(46),**

**caractérisé en ce que** le dispositif **(10)** comporte, dans le circuit d'oscillation **(40),** un dispositif pilotable **(50, 50')** permettant de varier la valeur de résistance insérée en série dans le circuit d'oscillation **(40).**

**2.** Dispositif de coupure selon la revendication **1, caractérisé en ce qu'**il comporte au moins un interrupteur de by-pass **(50, 50')** et une résistance d'amortissement **(48, 48'), en ce que** l'interrupteur de by-pass **(50, 50')** est susceptible de basculer entre un état ouvert et un état fermé, la résistance d'amortissement **(48, 48')** et l'interrupteur de by-pass **(50, 50')** étant agencés de telle sorte que, dans un état de l'interrupteur de by-pass **(50, 50'),** la résistance d'amortissement **(48, 48')** est insérée électriquement en série dans le circuit d'oscillation **(40)** avec l'inductance **(42),** la capacité **(44)** et l'enclencheur d'oscillation **(46)** du circuit d'oscillation **(40),** tandis que, dans l'autre état de l'interrupteur de by-pass **(50, 50'),** la résistance d'amortissement **(48)** est court-circuitée par rapport au circuit d'oscillation.

**3.** Dispositif de coupure selon l'une des revendications **1** ou **2, caractérisé en ce que** le circuit d'oscillation **(40)** comporte au moins une résistance permanente (R'), insérée de manière permanente dans le circuit d'oscillation **(40),** électriquement en série avec l'inductance **(42),** la capacité **(44)** et l'enclencheur d'oscillation **(46)** du circuit d'oscillation **(40).**

4. Dispositif de coupure selon l'une quelconque des revendications précédentes, **caractérisé en ce que** le circuit d'oscillation **(40)** comporte plusieurs résistances d'amortissement **(48, 48')** associées chacune à un interrupteur distinct de by-pass **(50, 50')** de la résistance d'amortissement **(48, 48'), en ce que** chaque interrupteur de by-pass **(50, 50')** est susceptible de basculer entre un état ouvert et un état fermé, une résistance d'amortissement **(48, 48')** et l'interrupteur de by-pass **(50, 50')** associé étant agencés de telle sorte que, dans un état de l'interrupteur de bypoass **(50, 50')**, la résistance d'amortissement **(48, 48')** associée à l'interrupteur de by-pass **(50, 50')** est insérée électriquement en série dans le circuit d'oscillation **(40)** avec l'inductance **(42)**, la capacité **(44)** et l'enclencheur d'oscillation **(46)**, tandis que, dans l'autre état de l'interrupteur de by-pass **(50, 50')**, la résistance d'amortissement **(48, 48')** associée à l'interrupteur de by-pass est court-circuitée par rapport au circuit d'oscillation **(40)**.

5. Dispositif de coupure selon l'une quelconque des revendications précédentes, **caractérisé en ce qu'**il comporte un interrupteur secondaire **(24)**, mécanique, interposé dans la ligne principale **(16)** de telle sorte que l'interrupteur primaire **(18)** et l'interrupteur secondaire **(24)** sont interposés successivement dans la ligne principale **(16)** entre le point primaire **(12)** et le point secondaire **(14)** mais de part et d'autre d'un point intermédiaire **(13)** de la ligne principale **(16)**, les deux interrupteurs mécaniques **(18, 24)** étant commandés indépendamment chacun entre un état ouvert et un état fermé.

6. Dispositif de coupure selon la revendication **5, caractérisé en ce qu'**il comporte un parasurtenseur secondaire **(32)** agencé électriquement entre le point intermédiaire **(13)** et le point secondaire **(14)**, électriquement en parallèle de l'interrupteur secondaire **(24)**.

7. Dispositif de coupure selon la revendication **5, caractérisé en ce que** le dispositif **(10)** comporte, entre le point primaire **(12)** et le point secondaire **(14)**, un circuit capacitif tampon **(34)**, électriquement en parallèle de l'ensemble formé par l'interrupteur primaire **(18)** et de l'interrupteur secondaire **(24)**, et électriquement en parallèle de l'ensemble formé par le parasurtenseur primaire **(30)** et le parasurtenseur secondaire **(32)**, le circuit capacitif tampon **(34)** comportant un interrupteur d'activation **(36)** et une capacité tampon **(38)**.

8. Dispositif de coupure selon la revendication **7, caractérisé en ce que** le circuit capacitif tampon **(34)** ne comporte pas de composant inductif dédié.

9. Dispositif de coupure selon l'une des revendications **7** ou **8, caractérisé en ce que** l'interrupteur d'activation **(36)** et la capacité tampon **(38)** sont agencés électriquement en série dans une ligne **(35)** du circuit capacitif tampon allant du point primaire **(12)** au point secondaire **(14)**.

10. Dispositif de coupure selon l'une quelconque des revendications **7** à **9, caractérisé en ce que** le circuit capacitif tampon **(34)** comporte un circuit de décharge **(39)** de la capacité tampon **(38)**.

11. Dispositif de coupure selon l'une quelconque des revendications précédentes, **caractérisé en ce que** l'interrupteur primaire **(18)** comporte au moins un interrupteur à vide.

12. Dispositif de coupure selon l'une quelconque des revendications précédentes, **caractérisé en ce que** l'interrupteur secondaire **(24)** comporte au moins un interrupteur à gaz isolant, ou au moins un interrupteur à vide.

13. Procédé de pilotage d'un dispositif de coupure selon l'une quelconque des revendications **2** à **12, caractérisé en ce qu'**il comporte la détermination d'une valeur d'intensité d'un courant à couper au travers du dispositif, et la détermination, en fonction de la valeur déterminée d'intensité de courant de défaut, de l'état dans lequel l'au moins un interrupteur de bypass doit être basculé.

14. Procédé de pilotage d'un dispositif de coupure selon la renvendication **13, caractérisé en ce que** tous les interrupteurs de by-pass du circuit d'oscillation sont basculés simultanément.

15. Procédé de pilotage d'un dispositif de coupure selon la renvendication **14, caractérisé en ce que** certains au moins des interrupteurs de by-pass du circuit d'oscillation sont basculés avec un décalage de temps l'un par rapport à l'autre.

**Patentansprüche**

1. Stromunterbrechervorrichtung (10) für elektrischen Hochspannungsgleichstrom der Art, die beinhaltet:

- eine Hauptleitung (16) zwischen einem Primärpunkt (12) und einem Sekundärpunkt (14) und beinhaltend mindestens einen mechanischen Primärschalter (18), der in die Hauptleitung (16) eingefügt ist,
- einen Primärüberspannungsschutz (30), der parallel zu dem Primärschalter (18) angeordnet ist, und
- einen Schwingkreis (40), der elektrisch parallel zu dem Primärschalter (18) und elektrisch parallel zu dem Primärüberspannungsschutz (30) angeordnet ist, wobei der Schwingkreis (40) elektrisch in Reihe mindestens eine Induktivität (42), eine Kapazität (44) und einen Schwingauslöser (46) beinhaltet,

**dadurch gekennzeichnet, dass** die Vorrichtung (10) in dem Schwingkreis (40) eine steuerbare Vorrichtung (50, 50') beinhaltet, die ermöglicht, den Widerstandswert zu variieren, der in Reihe in den Schwingkreis (40) eingefügt ist.

2. Unterbrechervorrichtung nach Anspruch 1, **dadurch gekennzeichnet, dass** sie mindestens einen Bypass-Schalter (50, 50') und einen Dämpfungswiderstand (48, 48') beinhaltet, dass der Bypass-Schalter (50, 50') in der Lage ist, zwischen einem offenen Zustand und einem geschlossenen Zustand zu schalten, wobei der Dämpfungswiderstand (48, 48') und der Bypass-Schalter (50, 50') angeordnet sind, sodass in einem Zustand des Bypass-Schalters (50, 50') der Dämpfungswiderstand (48, 48') elektrisch in Reihe mit der Induktivität (42), der Kapazität (44) und dem Schwingauslöser (46) des Schwingkreises (40) in den Schwingkreis (40) eingefügt ist, während in dem anderen Zustand des Bypass-Schalters (50, 50') der Dämpfungswiderstand (48) gegenüber dem Schwingkreis kurzgeschlossen ist.

3. Unterbrechervorrichtung nach einem der Ansprüche 1 oder 2, **dadurch gekennzeichnet, dass** der Schwingkreis (40) mindestens einen permanenten Widerstand (R') beinhaltet, der auf permanente Weise in den Schwingkreis (40) eingefügt und elektrisch in Reihe mit der Induktivität (42), der Kapazität (44) und dem Schwingauslöser (46) des Schwingkreises (40) ist.

4. Unterbrechervorrichtung nach einem der vorhergehenden Ansprüche, **dadurch gekennzeichnet, dass** der Schwingkreis (40) mehrere Dämpfungswiderstände (48, 48') beinhaltet, denen jeweils ein separater Bypass-Schalter (50, 50') des Dämpfungswiderstands (48, 48') zugeordnet ist, dass jeder Bypass-Schalter (50, 50') in der Lage ist, zwischen einem offenen Zustand und einem geschlossenen Zustand zu schalten, wobei ein Dämpfungswiderstand (48, 48') und der zugeordnete Bypass-Schalter (50, 50') angeordnet sind, sodass in einem Zustand des Bypass-Schalters (50, 50') der Dämpfungswiderstand (48, 48'), der dem Bypass-Schalter (50, 50') zugeordnet ist, elektrisch in Reihe mit der Induktivität (42), der Kapazität (44) und dem Schwingauslöser (46) in den Schwingkreis (40) eingefügt ist, während in dem anderen Zustand des Bypass-Schalters (50, 50') der Dämpfungswiderstand (48, 48'), der dem Bypass-Schalter zugeordnet ist, gegenüber dem Schwingkreis (40) kurzgeschlossen ist.

5. Unterbrechervorrichtung nach einem der vorhergehenden Ansprüche, **dadurch gekennzeichnet, dass** sie einen mechanischen Sekundärschalter (24) beinhaltet, der in die Hauptleitung (16) eingefügt ist, sodass der Primärschalter (18) und der Sekundärschalter (24) nacheinander in die Hauptleitung (16) zwischen dem Primärpunkt (12) und dem Sekundärpunkt (14) eingefügt sind, aber auf beiden Seiten eines Zwischenpunktes (13) der Hauptleitung (16) die zwei mechanischen Schalter (18, 24) jeweils unabhängig zwischen einem offenen Zustand und einem geschlossenen Zustand gesteuert werden.

6. Unterbrechervorrichtung nach Anspruch 5, **dadurch gekennzeichnet, dass** sie einen Sekundärüberspannungsschutz (32) beinhaltet, der elektrisch zwischen dem Zwischenpunkt (13) und dem Sekundärpunkt (14), elektrisch parallel zu dem Sekundärschalter (24) angeordnet ist.

7. Unterbrechervorrichtung nach Anspruch 5, **dadurch gekennzeichnet, dass** die Vorrichtung (10) zwischen dem Primärpunkt (12) und dem Sekundärpunkt (14) einen kapazitiven Pufferkreis (34) beinhaltet, der elektrisch parallel zu der Einheit, die durch den Primärschalter (18) und den Sekundärschalter (24) gebildet ist, und elektrisch parallel zu der Einheit ist, die durch den Primärüberspannungsschutz (30) und den Sekundärüberspannungsschutz (32) gebildet ist, wobei der kapazitive Pufferkreis (34) einen Aktivierungsschalter (36) und eine Pufferkapazität (38) beinhaltet.

8. Unterbrechervorrichtung nach Anspruch 7, **dadurch gekennzeichnet, dass** der kapazitive Pufferkreis (34) keine eigene induktive Komponente beinhaltet.

9. Unterbrechervorrichtung nach einem der Ansprüche 7 oder 8, **dadurch gekennzeichnet, dass** der Aktivierungsschalter (36) und die Pufferkapazität (38) elektrisch in Reihe in einer Leitung (35) des kapazitiven Pufferkreises, der von dem Primärpunkt (12) zu dem Sekundärpunkt (14) geht, angeordnet sind.

10. Unterbrechervorrichtung nach einem der Ansprüche 7 bis 9, **dadurch gekennzeichnet, dass** der kapazitive Pufferkreis (34) einen Entladekreis (39) der Pufferkapazität (38) beinhaltet.

11. Unterbrechervorrichtung nach einem der vorhergehenden Ansprüche, **dadurch gekennzeichnet, dass** der Primärschalter (18) mindestens einen Vakuumschalter beinhaltet.

12. Unterbrechervorrichtung nach einem der vorhergehenden Ansprüche, **dadurch gekennzeichnet, dass** der Sekundärschalter (24) mindestens einen Isoliergasschalter oder mindestens einen Vakuumschalter beinhaltet.

13. Verfahren zur Steuerung einer Unterbrechervorrichtung nach einem der Ansprüche 2 bis 12, **dadurch gekennzeichnet, dass** sie das Bestimmen eines Intensitätswertes eines durch die Vorrichtung zu unterbrechenden Stroms und das Bestimmen, in Abhängigkeit von dem bestimmten Intensitätswert von Fehlerstrom, des Zustands, in dem der mindestens eine Bypass-Schalter geschaltet werden muss, beinhaltet.

14. Verfahren zur Steuerung einer Unterbrechervorrichtung nach Anspruch 13, **dadurch gekennzeichnet, dass** alle Bypass-Schalter des Schwingkreises gleichzeitig geschaltet werden.

15. Verfahren zur Steuerung einer Unterbrechervorrichtung nach Anspruch 14, **dadurch gekennzeichnet, dass** mindestens einige der Bypass-Schalter des Schwingkreises mit einer zeitlichen Versetzung in Bezug zueinander geschaltet werden.


**Claims**

1. A current cut-off device (10) for high-voltage DC electrical current, of the type including:

   - a main line (16) between a primary point (12) and a secondary point (14) and including at least one mechanical primary switch (18) interposed in the main line (16);
   - a primary surge protector (30) arranged in parallel with the primary switch (18) ; and
   - an oscillation circuit (40) arranged electrically in parallel with the primary switch (18) and electrically in parallel with the primary surge protector (30), the oscillation circuit (40) including, electrically in series, at least an inductor (42), a capacitance (44) and an oscillation trigger (46),

   **characterized in that** the device (10) includes, in the oscillation circuit (40), a controllable device (50, 50') for varying the resistance value inserted in series into the oscillation circuit (40).

2. The cut-off device according to claim 1, **characterized in that** it includes at least a bypass switch (50, 50') and a damping resistor (48, 48'), **in that** the bypass switch (50, 50') is able to switch between an open state and a closed state, the damping resistor (48, 48') and the bypass switch (50, 50') being arranged such that, in a state of the bypass switch (50, 50'), the damping resistor (48, 48') is inserted electrically in series into the oscillation circuit (40) with the inductor (42), the capacitance (44) and the oscillation trigger (46) of the oscillation circuit (40) while, in the other state of the bypass switch (50, 50'), the damping resistor (48) is short-circuited relative to the oscillation circuit.

3. The cut-off device according to any of claims 1 or 2, **characterized in that** the oscillation circuit (40) includes at least one permanent resistor (R'), permanently inserted into the oscillation circuit (40), electrically in series with the inductor (42), the capacitance (44) and the oscillation trigger (46) of the oscillation circuit (40).

4. The cut-off device according to any one of the preceding claims, **characterized in that** the oscillation circuit (40) includes several damping resistors (48, 48') each associated with a distinct bypass switch (50, 50') of the damping resistor (48, 48'), **in that** each bypass switch (50, 50') is able to switch between an open state and a closed state, a damping resistor (48, 48') and the associated bypass switch (50, 50') being arranged such that, in a state of the bypass switch (50, 50'), the damping resistor (48, 48') associated with the bypass switch (50, 50') is inserted electrically in series into the oscillation circuit (40) with the inductor (42), the capacitance (44) and the oscillation trigger (46), while in the other state of the bypass switch (50, 50'), the damping resistor (48, 48') associated with the bypass switch is short-circuited relative to the oscillation circuit (40).

5. The cut-off device according to any one of the preceding claims, **characterized in that** it includes a mechanical secondary switch (24) interposed in the main line (16) such that the primary switch (18) and the secondary switch (24) are interposed successively in the main line (16) between the primary point (12) and the secondary point (14) but on either side of an intermediate point (13) of the main line (16), the two mechanical switches (18, 24) being each independently controlled between an open state and a closed state.

6.  The cut-off device according to claim 5, **characterized in that** it includes a secondary surge protector (32) arranged electrically between the intermediate point (13) and the secondary point (14), electrically in parallel with the secondary switch (24).

7.  The cut-off device according to claim 5, **characterized in that** the device (10) includes, between the primary point (12) and the secondary point (14), a capacitive buffer circuit (34), electrically in parallel with the assembly formed by the primary switch (18) and the secondary switch (24), and electrically in parallel with the assembly formed by the primary surge protector (30) and the secondary surge protector (32), the capacitive buffer circuit (34) including an activation switch (36) and a buffer capacitance (38).

8.  The cut-off device according to claim 7, **characterized in that** the capacitive buffer circuit (34) does not include a dedicated inductive component.

9.  The cut-off device according to any of claims 7 or 8, **characterized in that** the activation switch (36) and the buffer capacitance (38) are arranged electrically in series in a line (35) of the capacitive buffer circuit going from the primary point (12) to the secondary point (14).

10. The cut-off device according to any one of claims 7 to 9, **characterized in that** the capacitive buffer circuit (34) includes a circuit for discharging (39) the buffer capacitance (38).

11. The cut-off device according to any one of the preceding claims, **characterized in that** the primary switch (18) includes at least one vacuum switch.

12. The cut-off device according to any one of the preceding claims, **characterized in that** the secondary switch (24) includes at least one isolating gas switch.

13. A method for controlling a cut-off device according to any one of claims 2 to 12, **characterized in that** it includes determining a value of intensity of a current to be cut off through the device, and determining, based on the determined value of fault current intensity, the state into which the at least one bypass switch must be switched.

14. The method for controlling a cut-off device according to claim 13, **characterized in that** all the bypass switches of the oscillation circuit are switched simultaneously.

15. The method for controlling a cut-off device according to claim 14, **characterized in that** some at least of the bypass switches of the oscillation circuit are switched with a time shift relative to the each other.

[Fig. 1]

[Fig. 2]

[Fig. 3]

EP 3 903 334 B1

20

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015078525 A
- US 20170178844 A
- DE 2136865
- WO 2015185096 A
- US 4442469 A
- US 3758790 A
- EP 3091626 A
- US 2014299579 A
- DE 102011083514
- WO 2015166600 A